(19) **Europäisches Patentamt**
**European Patent Office**
**Office européen des brevets**

(11) **EP 2 199 999 B1**

(12) **EUROPÄISCHE PATENTSCHRIFT**

(45) Veröffentlichungstag und Bekanntmachung des Hinweises auf die Patenterteilung:
**02.05.2012 Patentblatt 2012/18**

(51) Int Cl.:
*G08B 13/189* (2006.01)    *G08B 29/14* (2006.01)
*G01V 8/14* (2006.01)    *H01L 27/14* (2006.01)
*H04N 17/00* (2006.01)

(21) Anmeldenummer: **08022150.0**

(22) Anmeldetag: **19.12.2008**

(54) **Verfahren zum Testen eines optischen Sensors und testbarer optischer Sensor**

Method for testing an optical sensor and testable optical sensor

Procédé de test d'un capteur optique et capteur optique pouvant être testé

(84) Benannte Vertragsstaaten:
**BE CH DE LI**

(43) Veröffentlichungstag der Anmeldung:
**23.06.2010 Patentblatt 2010/25**

(73) Patentinhaber: **Pepperl + Fuchs GmbH**
**68307 Mannheim (DE)**

(72) Erfinder:
• **Nutz, Karl**
**15370 Petershagen (DE)**

• **Jurgeit, Ralph-Rainer, Dr.**
**16356 Ahrensfelde (DE)**
• **Bartsch, Stephan**
**12207 Berlin (DE)**

(74) Vertreter: **Schiffer, Axel Martin et al**
**Weber & Heim Patentanwälte**
**Irmgardstrasse 3**
**81479 München (DE)**

(56) Entgegenhaltungen:
**EP-A- 1 152 599    EP-A- 1 921 587**
**WO-A-03/067900**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 199 999 B1

**Beschreibung**

Die vorliegende Erfindung betrifft in einem ersten Gesichtspunkt ein Verfahren zum Testen eines optischen Sensors zum Nachweis von Objekten in einem Überwachungsbereich nach dem Oberbegriff des Anspruchs 1.

In einem weiteren Aspekt bezieht sich die Erfindung auf einen testbaren optischen Sensor zum Nachweis von Objekten in einem Überwachungsbereich nach dem Oberbegriff des Anspruchs 9.

Ein gattungsgemäßer testbarer optischer Sensor weist eine Sendeeinheit zum Strahlen von Sendelicht in den Überwachungsbereich und eine Empfangseinheit zum Nachweis von aus dem Übenrvachungsbereich zurückgestrahltem Licht auf. Die Empfangseinheit weist dabei mindestens einen Detektor mit einer Mehrzahl von Detektorsegmenten auf. Weiterhin ist zum Ansteuern der Sendeeinheit, zum Auswerten von von der Empfangseinheit nachgewiesenen Messsignalen und zum Abgeben von Schaltsignalen an eine angeschlossene Einrichtung eine Steuer- und Auswerteeinheit vorhanden. Bei der angeschlossenen Einrichtung kann es sich insbesondere um eine automatische Tür, beispielsweise um eine automatische Drehflügeltür, handeln, welche mit dem optischen Sensor sicherheitsmäßig überwacht werden soll. Der Überwachungsbereich ist dann beispielsweise ein Bereich auf dem Fußboden vor dem Türblatt der automatischen Drehflügeltür.

Sodann ist bei dem gattungsgemäßen testbaren optischen Sensor eine mit der Steuer- und Auswerteeinheit verbundene Testeinheit zum Testen der Detektorsegmente vorhanden, wobei die Testeinheit eine Testlichtquelle zum Bestrahlen der Detektorsegmente mit Testlicht aufweist. Die Steuer- und Auswerteeinheit ist schließlich eingerichtet zum Auswerten der Reaktionen der Detektorsegmente auf die Bestrahlung mit Testlicht und zum Abgeben eines Fehlersignals abhängig von dieser Auswertung.

Bei dem gattungsgemäßen erfindungsgemäßen Verfahren zum Testen eines optischen Sensors zum Nachweis von Objekten in einem Überwachungsbereich werden die einzelnen Detektorsegmente getestet, indem Testlicht auf die Detektorsegmente gestrahlt wird, eine Reaktion der Detektorsegmente ausgewertet wird und in Abhängigkeit dieser Auswertung ein Fehlersignal abgegeben wird. Bevorzugt wird die Funktionalität im Fehlerfall, wenn also ein Fehler eines oder mehrerer Detektorsegmente festgestellt und ein Fehlersignal abgegeben wird, so gewählt, dass die angeschlossene Einrichtung, beispielsweise eine zu überwachende automatische Drehflügeltür, in einen sicheren Zustand gebracht oder in einem sicheren Zustand gehalten wird.

Das Messprinzip der hier betrachteten optischen Sensoren besteht grundsätzlich darin, aus dem Überwachungsbereich kommendes Licht zu messen und mit bestimmten Werten oder Schwellen, die insbesondere eingelernt werden können, zu vergleichen. Insbesondere kann es sich bei den hier betrachteten optischen Sensoren um energetische Lichttaster, Reflexionslichtschranken oder Triangulationstaster handeln.

Optische Empfängerarrays mit einer Mehrzahl von Detektorsegmenten werden in Flächenkameras, Zeilenkameras und Triangulationssensoren eingesetzt. Für Sicherheitsanwendungen spielt die Erkennung von Ausfällen einzelner Detektorelemente des Empfängerarrays eine Rolle, die während des Betriebs auftreten können. Hierbei kann es sich beispielsweise um sogenannte "stuck-at"-Fehler und/oder um Verkopplungen handeln. Als "stuck-at"-Fehler werden Fehler bezeichnet, bei denen das Ausgangssignal eines bestimmten Detektorsegments oder Detektorelements zeitlich konstant auf einem bestimmten Wert feststeckt. Es kann sich hierbei um Fehler oder Defekte der Detektorelemente selbst handeln, prinzipiell aber auch um Defekte der nachgeordneten Schaltungsstrukturen.

Bei Verkopplungen handelt es sich um Fehler, bei denen zwei oder mehrere benachbarte Detektorsegmente dasselbe Signal liefern. Dies kann beispielsweise bewirkt werden durch Kurzschlüsse in dem Chip, die wiederum im Bereich der fraglichen Detektorsegmente selbst, prinzipiell aber auch in elektronischen Strukturen auftreten können, die diesen Detektorsegmenten nachgeordnet sind. Hierdurch können neue unerwünschte Funktionen und Verhaltensweisen entstehen. Beispielsweise kann in Sicherheitsanwendungen die Detektion eines Objekts durch ein Detektorsegment durch den Kurzschluss mit einem anderen Detektorsegment überdeckt werden.

WO 03/067900 schlägt ein Verfahren zum Überprüfen der Funktionssicherheit eines Bildsensors vor, das auf einer Statistischen Analyse der Bildsignalwerte des Bildsensors beruht. Das R auschverhalten in/den Bildsignalwerten des Bildsensors wird ausgewertet und aus dessen Veränderungen lassen sich Rüchschlüsse auf mögliche Funktionsfehler des Sensors ziehen. Somit lassen sich z.B. "stuch-at" Fehler oder Verkopplungen frühseitig entdecken

DE 10 2006 058 057 B3 beschreibt das Erkennen solcher Fehler durch redundante Abbildung mit Hilfe eines Strahlteilers auf denselben Chip an unterschiedlichen Stellen. Fehlerhafte Elemente des Empfängerarrays können dabei durch Vergleich beider Bilder erkannt werden. Eine Fehlererkennung durch redundante Abbildung auf einem Chip ist jedoch nur in Ausnahmefällen möglich.

In DE 20 2006 014 318 U1 wird die Beleuchtung variiert, um "stuck-at"-Fehler der einzelnen Detektorelemente des Empfängerarrays zu erkennen. Die Variation der Beleuchtung ermöglicht zwar die Erkennung von "stuck-at"-Fehlern, nicht aber das Erkennen von Verkopplungsfehlern.

DE 100 17 333 C2 betrifft eine Vorrichtung, bei welcher das Bild dynamisiert wird, indem entweder die Kamera oder ein Testmuster bewegt werden. Eine solche Dynamisierung des von dem Detektorarray nachgewiesenen Bilds ist im Hinblick auf die vorrichtungsmäßigen Voraussetzungen vergleichsweise aufwändig und damit teuer.

In EP 902 402 A2 wird die Blendung des Arrays durch eine Lichtquelle beschrieben, um die Änderungsfähigkeit der einzelnen Pixel oder Detektorelemente zu testen.

In DE 10 2004 035 243 B4 wird vor dem Detektorarray über einen Strahlteiler ein Teil des Lichts zu einem zusätzlichen Sensor geführt, wobei das durch das Array empfangene Gesamtlicht in einem festen Verhältnis zum Signal des zusätzlichen Sensors bleiben soll. Eine solche Kontrolle mit einem zusätzlichen Photoempfänger über einen Strahlteiler kann zum einen Verkopplungen nicht nachweisen und ist auch beim Nachweis von "stuck-at"-Fehlern einzelner Elemente des Arrays verbesserungsfähig.

Als eine **Aufgabe** der vorliegenden Erfindung kann angesehen werden, ein Verfahren zum Testen eines optischen Sensors zum Nachweis von Objekten in einem Überwachungsbereich anzugeben, bei dem sowohl "stuck-at"-Fehler als auch Verkopplungsfehler zuverlässig aufgedeckt werden können. Weiterhin soll ein testbarer optischer Sensor zum Nachweis von Objekten in einem Überwachungsbereich geschaffen werden, der ein zuverlässiges Testen der Detektorsegmente sowohl im Hinblick auf "stuck-at"-Fehler als auch bezüglich Verkopplungsfehlern zuverlässig gestattet.

In verfahrensmäßiger Hinsicht wird diese Aufgabe durch das Verfahren mit den Merkmalen des Anspruchs 1 gelöst.

In vorrichtungsmäßiger Hinsicht wird diese Aufgabe durch den testbaren optischen Sensor mit den Merkmalen des Anspruchs 8 gelöst.

Vorteilhafte Varianten des erfindungsgemäßen Verfahrens und bevorzugte Ausgestaltungen des erfindungsgemäßen testbaren Sensors sind Gegenstand der abhängigen Ansprüche und werden außerdem in der folgenden Beschreibung, insbesondere mit Bezug auf die beigefügten Figuren, im Einzelnen beschrieben.

Das Verfahren der oben genannten Art ist erfindungsgemäß dadurch weitergebildet, dass räumlich benachbarte Detektorsegmente jeweils mit Intensitäten des Testlichts bestrahlt werden, die zum messtechnischen Unterscheiden der Reaktionen von räumlich benachbarten Detektorsegmenten bei ordnungsgemäßer Funktion der Detektorsegmente hinreichend unterschiedlich gewählt sind und dass Reaktionen der einzelnen Detektorsegmente auf die Bestrahlung mit Testlicht einzeln und im Vergleich mit Reaktionen von räumlich benachbarten Detektorsegmenten ausgewertet werden.

Der testbare optische Sensor der oben genannten Art ist erfindungsgemäß dadurch weitergebildet, dass die Testeinheit eingerichtet ist zum Bestrahlen von räumlich benachbarten Detektorsegmenten jeweils mit Intensitäten des Testlichts, die zum messtechnischen Unterscheiden der Reaktionen von räumlich benachbarten Detektorsegmenten auf die Bestrahlung mit dem Testlicht bei ordnungsgemäßer Funktion der Detektorsegmente hinreichend unterschiedlich sind, und dass die Steuer- und Auswerteeinheit eingerichtet ist zum Auswerten der von den einzelnen Detektorsegmenten nachgewiesenen Intensitäten des Testlichts sowohl einzeln als auch im Vergleich mit den von jeweils benachbarten Detektorsegmenten nachgewiesenen Intensitäten des Testlichts.

Im Rahmen von Vorarbeiten zur Erfindung wurde zunächst erkannt, dass ein fehlendes Empfangssignal bei Bestrahlung der Detektorsegmente mit Testlicht zwar ein notwendiges, jedoch kein hinreichendes Kriterium für einen Fehler des betreffenden Detektorsegments ist.

Außerdem wurde erkannt, dass die Tatsache allein, dass ein Detektorsegment auf Bestrahlung mit Testlicht ein Nachweissignal liefert, zwar eine notwendige, aber keine hinreichende Bedingung für die ordnungsgemäße Funktionstüchtigkeit des betrachteten Detektorsegments ist.

Um hierüber präzisere Aussagen zu erhalten, werden gemäß einem ersten Kerngedanken der vorliegenden Erfindung die einzelnen Detektorsegmente mit jeweils unterschiedlichen Intensitäten des Testlichts beaufschlagt.

Einem weiteren Kerngedanken der vorliegenden Erfindung entsprechend werden die Intensitäten des Testlichts so unterschiedlich gewählt, dass ordnungsgemäß arbeitende benachbart liegende Detektorsegmente bei Beaufschlagung mit dem Testlicht Messsignale liefern, welche messtechnisch unproblematisch unterscheidbar sind.

Ein Kerngedanke der Erfindung besteht sodann auch darin, die von den einzelnen Detektorsegmenten nachgewiesenen Intensitäten des Testlichts nicht nur für jedes Detektorelement einzeln sondern auch im Vergleich zu den Intensitäten auszuwerten, welche von benachbart liegenden Detektorsegmenten nachgewiesen werden.

Als erster wesentlicher Vorteil der Erfindung kann angesehen werden, dass sowohl "stuck-at"-Fehler als auch Verkopplungen besonders zuverlässig aufgedeckt werden können.

Sodann ist die hier vorgeschlagene Lösung in apparativer Hinsicht besonders einfach und kann deshalb kostengünstig verwirklicht werden.

Unter dem Begriff "Licht" wird für die vorliegende Beschreibung elektromagnetische Strahlung im sichtbaren Bereich sowie angrenzender Bereiche verstanden. Besonders bevorzugt arbeiten optische Sensoren der hier beschriebenen Art mit Infrarotlicht.

Um außerdem von der Empfangseinheit aus dem Überwachungsbereich zurückgestrahltes Licht, welches auf eingestrahltes Sendelicht zurückgeht, von Fremdlichtanteilen zu trennen, wird das Sendelicht bevorzugt oszillierend in den Überwachungsbereich eingestrahlt. Die Sendeeinheit weist hierzu mindestens einen Lichtsender auf, wobei es sich beispielsweise um Leuchtdioden oder Laserdioden handeln kann. Weiterhin ist üblicherweise eine geeignete Optik zum Leiten des Sendelichts in den Überwachungsbereich vorhanden. In entsprechender Weise sind auch bei der Empfangseinheit geeignete optische Mittel, beispielsweise Linsen, vorhanden, um aus dem Überwachungsbereich zurückgestrahltes Licht auf den Detektor oder die Detektoren zu leiten. Bei der Steuer- und Auswerteeinheit handelt es sich bevorzugt um integrierte elektronische Komponenten, beispielsweise Mikrocontroller oder programmierbare Logikbausteine.

Als Testlichtquellen können ebenfalls bevorzugt Leuchtdioden verwendet werden.

Die Erfindung kann grundsätzlich überall dort vorteilhaft eingesetzt und verwendet werden, wo es auf die besonders zuverlässige Kontrolle eines Überwachungsbereichs ankommt. Insbesondere ist die Erfindung für Anwendungen in sicherheitsrelevanten Bereichen geeignet, beispielsweise zur Überwachung von automatischen Drehflügeltüren oder automatischen Karusselltüren. Der erfindungsgemäße optische Sensor kann dabei zur mitfahrenden Montage an einem Türblatt der zu überwachenden automatischen Tür gebildet sein.

Bevorzugt werden die einzelnen Detektorsegmente separat ausgewertet. Für jedes einzelne Detektorsegment kann dafür ein separater Verstärker vorhanden sein und die verstärkten Empfangssignale der Detektorsegmente stehen dann für die nachfolgende Auswertung separat zur Verfügung.

Besonders vorteilhafte Anwendungen ergeben sich für den erfindungsgemäßen optischen Sensor sowie das erfindungsgemäße Testverfahren insbesondere bei Triangulationssensoren, wobei durch separates Auslesen und Verarbeiten der Signale einzelner Detektorsegmente eine Tastweite oder Nachweisbereiche gezielt und definiert eingestellt werden können.

Grundsätzlich ist es möglich, das Testlicht während der Testphasen praktisch mit konstanter Intensität auf die Detektorsegmente zu strahlen. Um aber von Fremdlichteinflüssen, beispielsweise durch Sonnenlicht, möglichst unabhängig zu sein, wird bei einer besonders bevorzugten Variante des erfindungsgemäßen Verfahrens das Testlicht oszillierend auf die Detektorsegmente gestrahlt. Dies ist insbesondere dann vorteilhaft, wenn als Testlichtquellen Infrarotquellen verwendet werden, da bei typischen Einsatzsituationen im Infrarotbereich erhebliche Fremdlichtanteile vorhanden sind.

Eine besonders hohe Arbeitssicherheit des erfindungsgemäßen optischen Sensors wird erzielt, wenn die Detektorsegmente vor jeder Messung zum Nachweis von Objekten in dem Überwachungsbereich getestet werden.

Im Hinblick auf die Auswertung der von den Detektorsegmenten nachgewiesenen Intensitäten des Testlichts ist es zweckmäßig, wenn beim Einrichten des optischen Sensors mindestens einmal die Reaktionen der Detektorsegmente auf die Bestrahlung mit dem Testlicht gemessen werden und als ursprüngliche Testlichtsignalverteilung aufgezeichnet wird. Eventuelle Veränderungen können dann durch Vergleich mit dieser ursprünglichen Testlichtsignalverteilung ermittelt werden.

Bei einer in konstruktiver Hinsicht einfach zu realisierenden Variante des erfindungsgemäßen Verfahrens wird der optische Aufbau so gewählt, dass die Intensität des Testlichts entlang einer Zeile von Detektorsegmenten monoton ansteigt oder abfällt. Dies kann beispielsweise durch einen Aufbau verwirklicht werden, bei dem als Mittel zum Leiten des Testlichts auf die Detektorsegmente mindestens ein Reflektor vorhanden ist, der zum schrägen Beleuchten der Detektorsegmente mit dem Testlicht seitlich benachbart neben dem Detektor positioniert ist.

Beispielsweise kann der Reflektor an einem Ende einer Zeile von Detektorsegmenten angeordnet sein. Bevorzugt ist dabei die Testlichtquelle ebenfalls seitlich benachbart zu dem Detektor positioniert, der seinerseits bevorzugt oberhalb der Testlichtquelle angeordnet ist und deren Licht unter einem sehr spitzen Winkel auf die Detektorsegmente leitet. Die dem Reflektor und der Testlichtquelle am nächsten liegenden Detektorsegmente werden dann mit der größten Testlichtintensität und die am fernsten liegenden Detektorsegmente werden mit der kleinsten Testlichtintensität beaufschlagt.

Wenn die Detektorsegmente sehr dicht liegen, kann es von Vorteil sein, das Testlicht stärker zu strukturieren, als durch eine einfache, monoton ansteigende oder abfallende Intensitätsverteilung. Besonders bevorzugt wird für solche Anwendungssituationen das Testlicht mit einem Lichtmuster auf die Detektorsegmente eingestrahlt. Beispielsweise kann es sich hierbei um ein räumlich oszillierendes Lichtmuters handeln. In vorrichtungsmäßiger Hinsicht kann das zum Beispiel bewerkstelligt werden, indem der Reflektor mit einer Strukturierung versehen ist, also ein räumlich strukturiertes Reflexionsvermögen aufweist.

Ergänzend oder alternativ kann als Mittel zum Leiten des Testlichts auf den Detektor mindestens eine Beugungsoptik, beispielsweise ein Beugungsgitter, vorhanden sein.

Um zu verhindern, dass eventuelle Verschmutzungen oder Verunreinigungen auf optischen Komponenten zu unzutreffenden Ergebnissen bei der Auswertung der von den einzelnen Detektorsegmenten nachgewiesenen Intensitäten des Testlichts führen, wird die Testlichtquelle bevorzugt so positioniert, dass das Testlicht außerhalb einer Optik zum Leiten des Lichts aus dem Überwachungsbereich auf den Detektor geleitet wird.

Grundsätzlich können die Detektorsegmente selbst und die nachgeordneten Komponenten unterschiedlich sein. Beispielsweise können die Detektorsegmente unterschiedliche Größen aufweisen, was insbesondere für den Einsatz als Triangulationssensor bevorzugt ist. In diesem Zusammenhang ist bekannt, die Detektorsegmente für den Nachweis von Licht aus dem Fernbereich dichter anzuordnen, also dementsprechend kleiner zu wählen, als die Detektorsegmente, welche zum Nachweis von Licht aus dem Nahbereich verwendet werden.

Im Hinblick auf die nachfolgende Auswertung der Intensitäten der Testlichtsignale ist aber bevorzugt, wenn die Detektorsegmente und die nachgeordneten Komponenten, also insbesondere die Verstärker jedenfalls in der Weise gleichartig sind, dass eine Beaufschlagung dieser Detektorsegmente mit gleichen Testlichtintensitäten zu gleich großen Ausgangssignalen führt.

Prinzipiell ist aber möglich, dass sich die den einzelnen Detektorsegmenten nachgeordneten Verstärkerkanäle unterscheiden. Beispielsweise kann es dadurch zu Situationen kommen, bei denen eine tatsächlich vorhandene Verkopplung zweier Elemente nicht erkannt wird, da aufgrund unterschiedlicher Verstärkungen in den nachfolgenden Verstärkerkanälen ungleiche Ausgangssignale geliefert werden. Um in solchen Situationen Verkopplungsfehler dennoch erkennen zu können, kann eine Testlichtsignalverteilung über den Detektor, also das gesamte Detektorarray, in der Steuer- und Auswerteeinheit, welche an die einzelnen Verstärker angeschlossen ist, abgespeichert werden. Die Steuer- und Auswerteeinheit kann dann bei jedem Test die Testlichtsignalverteilung mit der abgespeicherten Testlichtsignalverteilung, insbesondere der ursprünglichen Testlichtsignalverteilung, vergleichen.

Durch Degradation der Testlichtquelle und sonstiger Komponenten kann sich die Testlichtsignalverteilung selbst bei ordnungsgemäß funktionierenden und arbeitenden Detektorsegmenten langsam ändern, das heißt zwischen einer ursprünglichen Testlichtsignalverteilung und einer tatsächlichen Testlichtsignalverteilung stellt sich nach und nach ein Unterschied um einen gewissen Faktor ein.

Besonders bevorzugt werden solche langsamen zeitlichen Änderungen der Testlichtsignalverteilung mitgeführt und bei der Auswertung berücksichtigt. Rasche und abrupte Änderungen des Verhaltens der Detektorsegmente werden dann bei dem Test erkannt, langsame kontinuierliche Veränderungen werden jedoch ignoriert. Unnötige Ausfälle des optischen Sensors können so vermieden werden.

Besonders vorteilhaft ist in diesem Zusammenhang, wenn die gemessenen Testlichtsignalverteilungen normiert werden. Beispielsweise kann die Testlichtsignalverteilung normiert werden, indem das Testlichtsignal eines bestimmten Detektorsegments aus der aktuell gemessenen Testlichtsignalverteilung durch das entsprechende Signal für dieses bestimmte Detektorsegment aus der ursprünglichen Testlichtsignalverteilung geteilt wird, dass anschließend alle Werte der ursprünglichen Testlichtsignalverteilung mit diesem Quotienten multipliziert werden und dass die hieraus resultierende Testlichtverteilung schließlich mit der aktuell gemessenen Testlichtsignalverteilung verglichen wird. Dieser Normierung liegt als Kerngedanke zugrunde, dass eine langsame zeitliche Veränderung der Testlichtsignalverteilung für alle Detektorsegmente in gleicher Weise erfolgt, dass beispielsweise die nachgewiesenen Testlichtintensitäten für alle Detektorsegmente um einen bestimmten Prozentsatz zurückgehen. Sodann wird ein bestimmtes Detektorsegment herausgegriffen und gewissermaßen als Sonde für diese relative Änderung der Testlichtintensität verwendet.

Bei einer alternativen Normierungsvariante werden die Testlichtsignalverteilungen normiert, indem durch eine Summe der von allen Detektorsegmenten nachgewiesenen Testlichtintensitäten dividiert wird. Die so normierte Testlichtsignalverteilung wird dann mit der ebenso normierten ursprünglichen Testlichtsignalverteilung verglichen.

Eine höhere zeitliche Stabilität des Gesamtsystems kann erzielt werden, wenn die Testlichtquelle auf derselben Leiterplatte wie der Detektor angeordnet ist.

Weitere Vorteile und Merkmale der vorliegenden Erfindung werden nachstehend mit Bezug auf die beigefügten Figuren beschrieben. Hierin zeigt:

Fig. 1    in schematischer Ansicht ein erstes Ausführungsbeispiel eines erfindungsgemäßen optischen Sensors; und

Fig. 2    eine Teilansicht des in Fig. 1 gezeigten erfindungsgemäßen opti- schen Sensors.

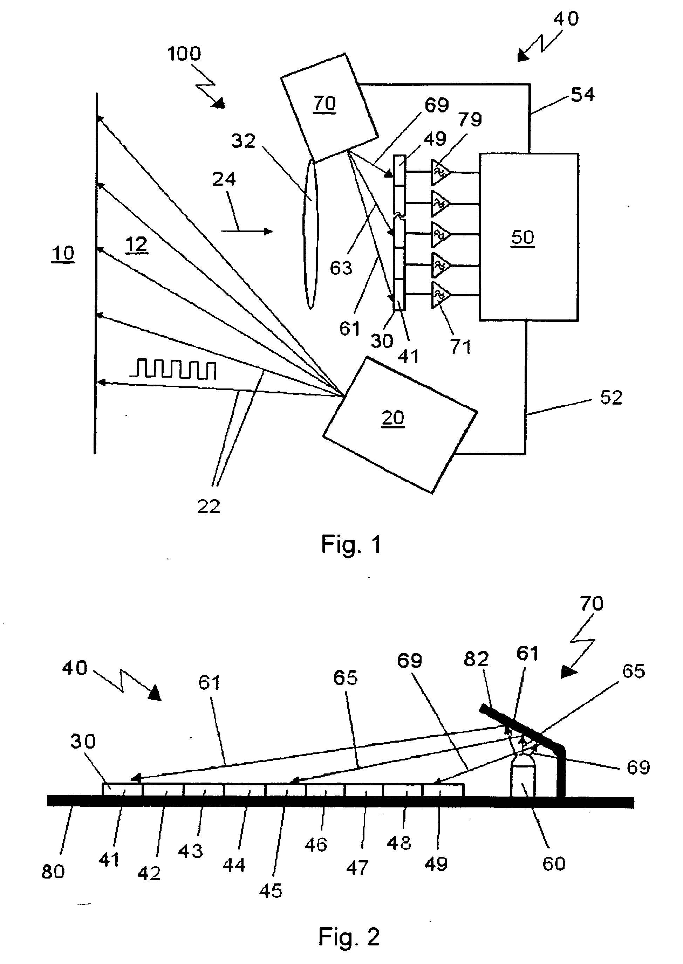

Ein Ausführungsbeispiel eines erfindungsgemäßen optischen Sensors 100 wird mit Bezug auf die Figuren 1 und 2 beschrieben. Äquivalente Komponenten sind in beiden Figuren mit denselben Bezugszeichen versehen.

Der erfindungsgemäße optische Sensor 100, der in Fig. 1 in einer schematischen Gesamtansicht gezeigt ist, weist als wesentliche Bestandteile eine Sendeeinheit 20, eine Empfangseinheit 40, eine Steuer- und Auswerteeinheit 50 und eine Testeinheit 70 auf.

Mit der Sendeeinheit 20 wird Sendelicht, schematisch dargestellt durch Pfeile 22, in einen Überwachungsbereich 12 und in eine dort zu beleuchtende Szene 10 gestrahlt. Aus dem Überwachungsbereich 12 zurückgestrahltes Licht 24 wird über eine Optik 32 auf einen aus einer Mehrzahl von Detektorsegmenten 41,..,49 aufgebauten Detektor 30 geleitet, der einen wesentlichen Bestandteil der Empfangseinheit 40 bildet.

Die Sendeeinheit 20 beinhaltet eine nicht im Detail dargestellte oszillierende Lichtquelle, beispielsweise oszillierend abstrahlende Laserdioden. Um von Fremdlichteinflüssen, beispielsweise durch Sonnenlicht, möglichst unabhängig zu sein, wird dementsprechend mit Vorverstärkern 71,..,79, welche den einzelnen Detektorsegmenten 41,..,49, zugeordnet sind, jeweils nur ein oszillierender Anteil des Empfangssignals der jeweiligen Detektorsegmente 41,..,49 verstärkt. Die Ausgänge der Vorverstärker 71,..,79 sind mit der Steuer- und Auswerteeinheit 50 verbunden, wo die Empfangssignale der Detektorsegmente 41,..,49 verarbeitet werden. In Abhängigkeit dieser Auswertung wird dann in an sich bekannter Weise an einem Ausgang der Steuer- und Auswerteeinheit ein Schaltsignal bereitgestellt. Die Steuer- und Auswerteeinheit 50 ist über Verbindungsleitungen 52, 54 mit der Sendeeinheit 20 einerseits und der Testeinheit 70 andererseits verbunden. Wichtig ist, dass die Nachweissignale der einzelnen Detektorsegmente 41,..,49 jeweils separat verstärkt und in der Steuer- und Auswerteeinheit 50 ausgewertet werden.

Die Testeinheit 70 beinhaltet eine Testlichtquelle 60, wobei es sich beispielsweise um eine oszillierend betriebene Infrarotleuchtdiode handeln kann. Die Testlichtquelle 60 sendet erfindungsgemäß Testlicht auf die einzelnen Detektorsegmente 41,..,49. Um anzudeuten, dass die Intensität dieses Testlichts in erfindungsgemäßer Weise für räumlich benachbarte Detektorsegmente, beispielsweise für die Detektorsegmente 41 und 42, jeweils in qualifizierter Weise unterschiedlich ist, ist in Fig. 2 das jeweils auf die Detektorsegmente 41,..,49 eingestrahlte Testlicht mit Pfeilen 61,..,69 versehen. Um die Darstellung übersichtlicher zu halten, sind die zu den Segmenten 42, 43, 44, 46, 47, 48 gehörenden Testlichtstrahlen nicht im Einzelnen dargestellt.

Die erfindungsgemäße Verteilung der Intensitäten des Testlichts 61,..,69 über die einzelnen Detektorsegmente 41,..,49 wird bei dem in den Figuren 1 und 2 gezeigten Ausführungsbeispiel dadurch erzielt, dass die Testlichtquelle 60 einerseits seitlich benachbart zu dem Detektor 30, der auch als Detektorarray bezeichnet werden kann, angeordnet ist und andererseits dadurch, dass die Strahlung der Testlichtquelle 60 mit Hilfe eines Reflektors 82 so umgeleitet wird, dass das Testlicht, wie in Fig. 2 angedeutet, unter einem vergleichweise spitzen Winkel auf die Detektorsegmente 41,.., 49 fällt. Mit dem über der Testlichtquelle 60 angebrachten Reflektor 82 wird das Testlicht 61,..,69 demgemäß über den Detektor 30 gestreut. Dadurch wird, beginnend mit dem Detektorsegment 41 auf der linken Seite in der Darstellung in Fig. 2, ein monoton ansteigender Verlauf der Testlichtintensitäten bis hin zum Detektorsegment 49 auf der rechten Seite des Detektors 30 in Fig. 2 erreicht. In dem in Fig. 2 gezeigten Ausführungsbeispiel ist außerdem die Testlichtquelle 60 auf derselben Leiterplatte 80 wie der Detektor 30 angeordnet. Im Vergleich zu mechanisch getrennten Aufbauten wird dadurch eine höhere Stabilität erzielt.

Der erfindungsgemäße optische Sensor und das erfindungsgemäße Verfahren zum Testen eines optischen Sensors arbeiten wie folgt. Die Detektorsegmente 41,..,49 des Detektors 30 sind in grundsätzlich bekannter Weise mit den Eingängen der Vorverstärker 71,..,79 mit Hochpasscharakter verbunden. Diese Verstärker lassen kurze Pulse durch, sperren aber langsam veränderliche Signalanteile. In prinzipiell bekannter Weise können dadurch Einflüsse des Umgebungslichts weitgehend eliminiert werden. Die auf den Detektor 30 abzubildende Szene 10 wird durch die Sendeeinheit 20 beleuchtet. Durch die Optik 32 wird die Szene 12 auf den Detektor 30 abgebildet. Detektorsegmente 41,.., 49, die mit einem "stuck-at"-Fehler ausgefallen sind, können kein Wechselsignal liefern. Das Signal am Ausgang eines mit einem solchen Detektorsegment verbundenen Vorverstärkers ist demgemäß Null.

Dieser Fall kann aber nicht von demjenigen unterschieden werden, bei dem ein bestimmtes Detektorsegment kein Licht aus der Szene 10 erhält. Deshalb ist ein verschwindendes Signal am Ausgang eines bestimmten Verstärkers noch kein eindeutiges Kriterium dafür, dass das zugehörige Detektorelement 41,..,49 tatsächlich ausgefallen ist.

Um einen solchen Ausfall zweifelsfrei festzustellen, wird in dem in den Figuren gezeigten Ausführungsbeispiel die Testlichtquelle 60 verwendet, die zunächst ebenfalls oszillierendes Licht aussendet und außerdem den Detektor 30 in der oben beschriebenen Weise schräg beleuchtet. Wegen des schrägen Einfalls des Testlichts 61,..,69 variiert die von den einzelnen Detektorsegmenten 41,..,49 empfangene Lichtleistung von einem Detektorsegment zu dem jeweils benachbarten Detektorsegment.

Wenn die Detektorsegmente 41,..,49 vergleichsweise klein sind und dicht angeordnet sind, kann es zweckmäßig sein, dass die Testlichtquelle ein Lichtmuster auf den Detektor 30 projiziert. Dies kann in grundsätzlich bekannter Weise mit Hilfe einer Beugungsoptik, mit strukturierten Reflektoren und/oder mit geeignet strukturierten Masken erreicht werden.

Zur Durchführung des Tests, bevorzugt vor jeder eigentlichen Messung, die mit dem optischen Sensor 100 durchgeführt wird, wird die Testlichtquelle 60 eingeschaltet. Da jedes einzelne Detektorsegment 41,..,49 beleuchtet wird, muss jedes Detektorelement 41,..,49 ein Wechselsignal abgeben. Detektorsegmente 41,..,49, welche mit einem "stuck-at"-Fehler ausgefallen sind, werden bei diesem Test daran erkannt, dass das Ausgangssignal des mit diesen Detektorsegmenten 41,..,49 verbundenen Vorverstärkers 71,..,79 verschwindet, also Null ist. Weiterhin müssen, da jedes Detektorsegment 41,..,49 bei dem erfindungsgemäßen Test unterschiedlich beleuchtet wird, auch die von benachbarten Detektorsegmenten 41,..,49 abgegebenen Signale unterschiedlich sein. Wenn von räumlich benachbarten Detektorsegmenten 41,..,49 gleiche Signale abgegeben werden, bedeutet dies, dass ein Verkopplungsfehler vorliegt.

Bevorzugt wird beim Einrichten des optischen Sensors 100 mindestens einmal eine Testlichtsignalverteilung gemessen und abgespeichert. Eine solche Testlichtsignalverteilung wird im Folgenden als $T_i(t_0)$ bezeichnet, wobei durch den Index i das i-te Detektorsegment und durch $t_0$ ein Ausgangszeitpunkt bezeichnet wird. Durch Degradation der Testlichtquelle 60 kann sich im Lauf der Zeit zwischen der ursprünglich abgespeicherten Testlichtsignalverteilung $T_i(t_0)$ ein Unterschied entwickeln, der durch einen bestimmten Faktor dargestellt werden kann. Um das zu berücksichtigen, kann dieser Faktor anhand des Verhältnisses des für ein einzelnes Detektorsegment gespeicherten Testlichtsignalwerts zu einem aktuell gemessenen Testlichtsignalwert für das entsprechende Detektorsegment bestimmt werden. Anschließend kann eine gemessene Testlichtsignalverteilung normiert werden, in dem sie mit dem genannten Faktor multipliziert wird. Abweichungen der normierten gemessenen Testlichtsignalverteilung von einer abgespeicherten Testlichtsignalverteilung zeigen dann "stuck-at"-Fehler und/oder Verkopplungsfehler an.

Konkret können demgemäß Normierungsfaktoren $F_i(t_n)$ gebildet werden als Quotienten einer ursprünglichen Testsignalverteilung $T_i(t_0)$ und zu bestimmten Zeitpunkten $t_n$ gemessenen Testlichtsignalverteilungen $T_i(t_n)$. $F_i(t_n)$ ist also gegeben durch:

$$F_i(t_n): = T_i(t_0) / T_i(t_n)$$

Aus einer aktuell gemessenen Testlichtsignalverteilung $T_i(t_n)$ kann sodann durch Multiplikation mit einem zu einer zurückliegenden, also zu einem früheren Zeitpunkt $t_{n-1}$ durchgeführten Messung gehörenden Normierungsfaktor $F_i(t_{n-1})$ eine normierte Testlichtsignalverteilung $I_i(t_n)$ gewonnen werden:

$$I_i(t_n): = T_i(t_n)^*F_i(t_{n-1}) = T_i(t_n)^* \, T_i(t_0) / T_i(t_{n-1})$$

Um "stuck-at"-Fehler und Verkopplungsfehler festzustellen, wird sodann die normierte Testlichtverteilung $I_i(t_n)$ verglichen mit der ursprünglichen Testlichtsignalverteilung $T_i(t_0)$. Wenn eventuell festgestellte Abweichungen bestimmte, zuvor festgelegte Grenzwerte überschreiten, wird ein Fehlersignal abgegeben.

Mit der vorliegenden Erfindung werden ein Verfahren zum Testen eines optischen Sensors und ein testbarer optischer Sensor bereitgestellt, mit welchen das Prüfen der Funktionssicherheit eines optischen Empfängerarrays, welches mit einer dynamisierten Lichtquelle betrieben wird, in besonders zuverlässiger Weise möglich,ist.

**Patentansprüche**

1. Verfahren zum Testen eines optischen Sensors zum Nachweis von Objekten in einem Überwachungsbereich, insbesondere nach einem der Ansprüche 9 bis 16,
   mit einer Sendeeinheit (20) zum Strahlen von Sendelicht (22) in den Überwachungsbereich (12),
   mit einer Empfangseinheit (40) zum Nachweis von aus dem Überwachungsbereich (12) zurückgestrahltem Licht (24), wobei die Empfangseinheit (40) mindestens einen Detektor (30) mit einer Mehrzahl von Detektorsegmenten (41,..,49) aufweist,
   mit einer Steuer- und Auswerteeinheit (50) zum Ansteuern der Sendeeinheit (20), zum Auswerten von von der Empfangseinheit (40) nachgewiesenen Messsignalen und zum Abgeben von Schaltsignalen an eine angeschlossene Einrichtung,
   bei dem die einzelnen Detektorsegmente (41,..,49) getestet werden, indem Testlicht (61,..,69) auf die Detektorsegmente (41,..,49) gestrahlt, eine Reaktion der Detektorsegmente (41,..,49) ausgewertet und in Abhängigkeit dieser Auswertung ein Fehlersignal abgegeben wird,
   **dadurch gekennzeichnet,**
   **dass** räumlich benachbarte Detektorsegmente (41,..,49) jeweils mit Intensitäten des Testlichts (61,..,69) bestrahlt werden, die zum messtechnischen Unterscheiden der Reaktionen von räumlich benachbarten Detektorsegmenten (41,42) bei ordnungsgemäßer Funktion der Detektorsegmente (41,..,49) hinreichend unterschiedlich gewählt sind und
   **dass** Reaktionen der einzelnen Detektorsegmente (41,..,49) auf die Bestrahlung mit Testlicht (61,..,69) einzeln und im Vergleich mit Reaktionen von räumlich benachbarten Detektorsegmenten (41,..,49) ausgewertet werden.

2. Verfahren nach Anspruch 1,
   **dadurch gekennzeichnet,**
   **dass** das Testlicht (61,..,69) oszillierend auf die Detektorsegmente (41,..,49) gestrahlt wird.

3. Verfahren nach Anspruch 1 oder 2,
   **dadurch gekennzeichnet,**
   **dass** die Detektorsegmente (41,..,49) vor jeder Messung zum Nachweis von Objekten in dem Überwachungsbereich (12) getestet werden.

4. Verfahren nach einem der Ansprüche 1 bis 3,
   **dadurch gekennzeichnet,**
   **dass** beim Einrichten des optischen Sensors (100) mindestens ein Mal die Reaktionen der Detektorsegmente (41,..,

49) auf die Bestrahlung mit dem Testlicht (61,..,69) gemessen und als ursprüngliche Testlichtsignalverteilung ($T_i$($t_0$)) aufgezeichnet wird.

5. Verfahren nach einem der Ansprüche 1 bis 4,
**dadurch gekennzeichnet,**
**dass** die Intensität des Testlichts (61,..,69) entlang einer Zeile von Detektorsegmenten (41,..,49) monoton steigt.

6. Verfahren nach einem der Ansprüche 1 bis 5,
**dadurch gekennzeichnet,**
**dass** Testlicht mit einem Lichtmuster auf die Detektorsegmente (41,..,49) eingestrahlt wird.

7. Verfahren nach einem der Ansprüche 1 bis 6,
**dadurch gekennzeichnet,**
**dass** langsame zeitliche Änderungen der Testlichtsignalverteilung ($T_i$($t_n$)) mitgeführt und bei der Auswertung berücksichtigt werden.

8. Verfahren nach einem der Ansprüche 1 bis 7,
**dadurch gekennzeichnet,**
**dass** die Testlichtsignalverteilung normiert wird, indem das Testlichtsignal ($T_j$($t_n$)) eines bestimmten Detektorsegments aus der gemessenen Testlichtverteilung ($T_i$($t_n$)) durch das entsprechende Signal aus der ursprünglichen Testlichtsignalverteilung ($T_j$($t_0$)) geteilt wird, dass anschließend alle Werte der ursprünglichen Testlichtsignalverteilung ($T_i$($t_0$)) mit diesem Quotienten multipliziert werden und die hieraus resultierende Testlichtverteilung schließlich mit der gemessenen Testlichtsignalverteilung ($T_i$($t_n$)) verglichen wird.

9. Testbarer optischer Sensor zum Nachweis von Objekten in einem Überwachungsbereich, insbesondere zur Durchführung des Verfahrens nach einem der Ansprüche 1 bis 8,
mit einer Sendeeinheit (20) zum Strahlen von Sendelicht (22) in den Überwachungsbereich (12),
mit einer Empfangseinheit (40) zum Nachweis von aus dem Überwachungsbereich (12) zurückgestrahltem Licht (24), wobei die Empfangseinheit (40) mindestens einen Detektor (30) mit einer Mehrzahl von Detektorsegmenten (41,..,49) aufweist,
mit einer Steuer- und Auswerteeinheit (50) zum Ansteuern der Sendeeinheit (20), zum Auswerten von von der Empfangseinheit (40) nachgewiesenen Messsignalen und zum Abgeben von Schaltsignalen an eine angeschlossene Einrichtung, insbesondere eine automatische Tür,
mit einer mit der Steuer- und Auswerteeinheit (50) verbundenen Testeinheit (70) zum Testen der Detektorsegmente (41,..,49), wobei die Testeinheit (70) eine Testlichtquelle (60) zum Bestrahlen der Detektorsegmente (41,..,49) mit Testlicht (61,..,69) aufweist
wobei die Steuer- und Auswerteeinheit (50) eingerichtet ist zum Auswerten der Reaktionen der Detektorsegmente (41,..,49) auf die Bestrahlung mit Testlicht (61,..,69) und zum Abgeben eines Fehlersignals abhängig von dieser Auswertung,
**dadurch gekennzeichnet,**
**dass** die Testeinheit (70) eingerichtet ist zum Bestrahlen von räumlich benachbarten Detektorsegmenten (41,..,49) jeweils mit Intensitäten des Testlichts (61,..,69), die zum messtechnischen Unterscheiden der Reaktionen von räumlich benachbarten Detektorsegmenten (41,42) auf die Bestrahlung mit dem Testlicht (61,..,69) bei ordnungsgemäßer Funktion der Detektorsegmente (41,42) hinreichend unterschiedlich sind, und
**dass** die Steuer- und Auswerteeinheit (50) eingerichtet ist zum Auswerten der von den einzelnen Detektorsegmenten (41,..,49) nachgewiesenen Intensitäten des Testlichts (61,..,69) sowohl einzeln als auch im Vergleich mit den von jeweils benachbarten Detektorsegmenten (41,..,49) nachgewiesenen Intensitäten des Testlichts (61,..,69).

10. Sensor nach Anspruch 9,
**dadurch gekennzeichnet,**
**dass** als Mittel zum Leiten des Testlichts (61,..,69) auf die Detektorsegmente (41,..,49) mindestens ein Reflektor (82) vorhanden ist.

11. Sensor nach Anspruch 10,
**dadurch gekennzeichnet,**
**dass** der Reflektor (82) zum schrägen Beleuchten der Detektorsegmente (41,..,49) mit dem Testlicht (61,..,69) seitlich benachbart neben dem Detektor (30) positioniert ist.

12. Sensor nach einem der Ansprüche 9 bis 11,
**dadurch gekennzeichnet,**
**dass** die Testlichtquelle (60) so positioniert ist, dass das Testlicht (61,..,69) außerhalb einer Optik (32) zum Leiten des Lichts (24) aus dem Überwachungsbereich (12) auf den Detektor (30) geleitet wird.

13. Sensor nach einem der Ansprüche 9 bis 12,
**dadurch gekennzeichnet,**
**dass** die Detektorsegmente (41,..,49) gleichartige Detektorsegmente sind.

14. Sensor nach einem der Ansprüche 9 bis 13,
**dadurch gekennzeichnet,**
**dass** die Testlichtquelle (60) auf derselben Leiterplatte (80) wie der Detektor (30) angeordnet ist.

15. Sensor nach einem der Ansprüche 9 bis 14,
welcher als Triangulationssensor gebildet ist.

16. Sensor nach einem der Ansprüche 9 bis 15,
**dadurch gekennzeichnet,**
**dass** als Mittel zum Leiten des Testlichts (61,..,69) auf den Detektor (30) mindestens eine Beugungsoptik vorhanden ist.

**Claims**

1. A method for testing an optical sensor to confirm that objects are present in a monitored region, particularly as defined in any one of claims 9 to 16, comprising

   - a transmitter unit (20) for beaming emitted light (22) into said monitored region (12),
   - a receiver unit (40) for detecting light (24) reflected from said monitored region (12), said receiver unit (40) comprising at least one detector (30) having a plurality of detector segments (41, ..., 49),
   - a control and evaluation unit (50) for controlling the transmitter unit (20), for evaluating the measuring signals detected by said receiver unit (40), and for sending switching signals to a connected installation,

   in which the individual detector segments (41, ..., 49) are tested by beaming test light (61, ..., 69) onto said detector segments (41, ..., 49), evaluating a reaction of said detector segments (41, ..., 49) and emitting an error signal in response to this evaluation,
   **characterized in that**
   spatially adjacent detector segments (41, ... , 49) are each irradiated with intensities of the test light (61, ... , 69) that are selected so as to differ sufficiently to make it possible to measure different reactions of said spatially adjacent detector segments (41, 42) when said detector segments (41, ..., 49) are functioning according to their intended use and
   that the reactions of the individual detector segments (41, ..., 49) on being irradiated with test light (61, ..., 69) are evaluated individually and in comparison with reactions of adjacent detector segments (41, ... , 49).

2. The method as defined in claim 1,
**characterized in that**
said test light (61, ... , 69) is beamed onto said detector segments (41, ... , 49) in an oscillatory manner.

3. The method as defined in claim 1 or claim 2,
**characterized in that**
said detector segments (41, ..., 49) are tested prior to each measurement for the purpose of confirming the presence of objects in said monitored region (12).

4. The method as defined in any one of claims 1 to 3,
**characterized in that**
when said optical sensor (100) is being installed, the reaction of said detector segments (41, ..., 49) to the irradiation with said test light (61, ..., 69) is measured at least once and recorded as the original distribution of test light signals $(T_i(t_o))$.

**5.** The method as defined in any one of claims 1 to 4,
**characterized in that**
the intensity of said test light (61, ..., 69) along a line of detector segments (41, ..., 49) increases monotonically.

**6.** The method as defined in any one of claims 1 to 5,
**characterized in that**
test light displaying an optical pattern is beamed onto said detector segments (41, ... , 49).

**7.** The method as defined in any one of claims 1 to 6,
**characterized in that**
slow temporal changes in the distribution of test light signals ($T_i(t_n)$) are included in the measurements and allowed for in the evaluation.

**8.** The method as defined in any one of claims 1 to 7,
**characterized in that**
the distribution of test light signals is calibrated by dividing the test light signal ($T_j(t_n)$) of a specific detector segment in the measured test light distribution ($T_i(t_n)$) by the corresponding signal in the original distribution of test light signals ($T_i(t_o)$), that then all values of the original distribution of test light signals ($T_i(t_o)$) are multiplied by this quotient and finally the resultant test light distribution is compared with the measured distribution of test light signals ($T_i(t_n)$).

**9.** A testable optical sensor for confirming the presence of objects in a monitored region, particularly for execution of the method as defined in any one of claims 1 to 8, comprising

- a transmitter unit (20) for beaming emitted light (22) into said monitored region (12),
- a receiver unit (40) for detecting light (24) reflected from said monitored region (12), said receiver unit (40) comprising at least one detector (30) having a plurality of detector segments (41, ..., 49),
- a control and evaluation unit (50) for controlling the transmitter unit (20), for evaluating the measuring signals detected by said receiver unit (40), and for sending switching signals to a connected installation, more particularly an automatic door,
- a test unit (70) connected to said control and evaluation unit (50) for the purpose of testing said detector segments (41, ..., 49), wherein said test unit (70) has a test light source (60) for beaming test light (61, ..., 69) onto said detector segments (41, ..., 49)

wherein said control and evaluation unit (50) is configured to evaluate the reactions of said detector segments (41, ..., 49) when irradiated with test light (61, ..., 69) and to emit an error signal in response to said evaluation,
**characterized in that**
said test unit (70) is configured to irradiate spatially adjacent detector segments (41, ... , 49) each with intensities of said test light (61, ... , 69) that are selected so as to differ sufficiently to make it possible to measure different reactions of said spatially adjacent detector segments (41, 42) to the irradiation with test light (61, ..., 69) when said detector segments (41, 49) are functioning according to their intended use and
that said control and evaluation unit (50) is configured to evaluate the intensities of said test light (61, ..., 69) detected by said individual detector segments (41, ..., 49) both individually and in comparison with intensities of said test light (61, ... , 69) detected by the respective adjacent segments (41, ... , 49).

**10.** The sensor as defined in claim 9,
**characterized in that**
the means for passing said test light (61, ..., 69) to said detector segments (41, ..., 49) are in the form of at least one reflector (82).

**11.** The sensor as defined in claim 10,
**characterized in that**
said reflector (82) is positioned adjacent to the side of said detector (30) in order to achieve oblique illumination of said detector segments (41, ..., 49) with said test light (61, ..., 69).

**12.** The sensor as defined in any one of claims 9 to 11,
**characterized in that**
said test light source (60) is positioned such that said test light (61, ..., 69) is passed from said monitored region (12) to said detector (30) outside of an optical system (32) for guiding said light (24).

**13.** The sensor as defined in any one of claims 9 to 12,
**characterized in that**
said detector segments (41, ... , 49) are detector segments of the same type.

**14.** The sensor as defined in any one of claims 9 to 13,
**characterized in that**
said test light source (60) is disposed on the same printed board (80) as said detector (30).

**15.** The sensor as defined in any one of claims 9 to 14,
which is present in the form of a triangulation sensor.

**16.** The sensor as defined in any one of claims 9 to 15,
**characterized in that**
said means for guiding said test light (61, ..., 69) to said detector (30) are present in the form of at least one diffractive optical system.


**Revendications**

**1.** Procédé de test d'un capteur optique destiné à détecter des objets dans une zone de surveillance, en particulier selon l'une quelconque des revendications 9 à 16, avec une unité émettrice (20) pour envoyer une lumière émise (22) dans la zone de surveillance (12),
avec une unité réceptrice (40) pour détecter la lumière (24) renvoyée depuis la zone de surveillance (12), l'unité réceptrice (40) comprenant au moins un détecteur (30) avec une pluralité de segments (41, ..., 49) de détecteur,
avec une unité (50) de commande et d'analyse pour commander l'unité émettrice (20), pour analyser des signaux de mesure reçus par l'unité réceptrice (40) et pour délivrer des signaux de commutation à un dispositif raccordé,
dans lequel les différents segments de détecteur (41, ..., 49) sont testés en envoyant une lumière de test (61, ..., 69) sur les segments (41, ..., 49) de détecteur, en analysant une réaction des segments (41, ..., 49) de détecteur et en délivrant un signal d'erreur en fonction de cette analyse,
**caractérisé**
**en ce que** les segments (41, ..., 49) de détecteur spatialement voisins sont irradiés chacun avec des intensités de la lumière de test (61, ..., 69) qui sont choisies suffisamment différentes pour différencier par la mesure les réactions de segments de détecteur spatialement voisins (41, 42) dans le cas d'un fonctionnement correct des segments (41, ..., 49) de détecteur, et
**en ce que** des réactions des différents segments (41, ..., 49) de détecteur à l'irradiation avec la lumière de test (61, ..., 69) sont analysées séparément et par comparaison avec les réactions des segments (41, ..., 49) de détecteur spatialement voisins.

**2.** Procédé selon la revendication 1,
**caractérisé**
**en ce que** la lumière de test (61, ..., 69) est envoyée de manière oscillante sur les segments (41, ... , 49) de détecteur.

**3.** Procédé selon la revendication 1 ou 2,
**caractérisé**
**en ce que** les segments (41, ... , 49) de détecteur sont testés avant chaque mesure visant à détecter des objets dans la zone de surveillance (12).

**4.** Procédé selon l'une quelconque des revendications 1 à 3,
**caractérisé**
**en ce que**, lors de la mise en place du capteur optique (100), les réactions des segments (41, ..., 49) de détecteur à l'irradiation avec la lumière de test (61, ..., 69) sont mesurées au moins une fois et enregistrées en tant que distribution initiale ($T_i(t_0)$) des signaux de lumière de test.

**5.** Procédé selon l'une quelconque des revendications 1 à 4,
**caractérisé**
**en ce que** l'intensité de la lumière de test (61, ..., 69) le long d'une rangée de segments (41, ... , 49) de détecteurs augmente de façon monotone.

**6.** Procédé selon l'une quelconque des revendications 1 à 5,
*caractérisé*
*en ce que* la lumière de test est envoyée suivant un motif lumineux sur les segments (41, ... , 49) de détecteur.

**7.** Procédé selon l'une quelconque des revendications 1 à 6,
*caractérisé*
*en ce que* des variations temporelles lentes de la distribution $(T_i(t_n))$ des signaux de lumière de test sont suivies et prises en compte lors de l'analyse.

**8.** Procédé selon l'une quelconque des revendications 1 à 7,
*caractérisé*
*en ce que* la distribution des signaux de lumière de test est normée en divisant le signal $(T_j(t_n))$ de lumière de test d'un segment de détecteur donné de la distribution $(T_i(t_n))$ des signaux de lumière de test par le signal correspondant de la distribution initiale $(T_j(t_0))$ des signaux de lumière de test,
*en ce que*, toutes les valeurs de la distribution initiale $(T_i(t_0))$ des signaux de lumière de test sont ensuite multipliées par ces quotients et la distribution de lumière de test en résultant est enfin comparée avec la distribution $(T_i(t_n))$ mesurée des signaux de lumière de test.

**9.** Capteur optique pouvant être testé, destiné à détecter des objets dans une zone de surveillance, en particulier pour appliquer le procédé selon l'une quelconque des revendications 1 à 8,
avec une unité émettrice (20) pour envoyer une lumière émise (22) dans la zone de surveillance (12),
avec une unité réceptrice (40) pour détecter la lumière (24) renvoyée depuis la zone de surveillance (12), l'unité réceptrice (40) comprenant au moins un détecteur (30) avec une pluralité de segments (41, ..., 49) de détecteur,
avec une unité (50) de commande et d'analyse pour commander l'unité émettrice (20), pour analyser des signaux de mesure reçus par l'unité réceptrice (40) et pour délivrer des signaux de commutation à un dispositif raccordé, en particulier une porte automatique,
avec une unité (70) de test reliée à l'unité (50) de commande et d'analyse pour tester les segments (41, ... , 49) de détecteur, l'unité (70) de test comprenant une source (60) de lumière de test pour irradier les segments (41, ..., 49) de détecteur avec une lumière de test (61, ... , 69),
dans lequel l'unité (50) de commande et d'analyse est agencée pour analyser les réactions des segments (41, ..., 49) de détecteur à l'irradiation avec la lumière de test (61, ..., 69) et délivrer un signal d'erreur en fonction de cette analyse, *caractérisé*
*en ce que* l'unité de test (70) est agencée pour irradier des segments de détecteur (41, ..., 49) spatialement voisins avec des intensités de la lumière de test (61, ..., 69) qui sont choisies suffisamment différentes pour différencier par la mesure les réactions de segments de détecteur spatialement voisins (41, 42) à l'irradiation avec la lumière de test (61, ..., 69) dans le cas d'un fonctionnement correct des segments de détecteur (41, 42), et
*en ce que* l'unité de commande et d'analyse (50) est agencée pour analyser les intensités de la lumière de test (61, ..., 69) reçues par les différents segments de détecteur (41, ..., 49), tant séparément que par comparaison avec les intensités de la lumière de test (61, ... , 69) reçues par les segments (41, ... , 49) de détecteur spatialement voisins.

**10.** Capteur selon la revendication 9,
*caractérisé*
*en ce qu'*au moins un réflecteur (82) est présent comme moyen pour envoyer la lumière de test (61, ... , 69) sur les segments (41, ... , 49) de détecteur.

**11.** Capteur selon la revendication 10,
*caractérisé*
*en ce que* le réflecteur (82) est positionné latéralement à côté du détecteur (30) pour éclairer à l'oblique les segments (41, ..., 49) de détecteur avec la lumière de test (61, ... , 69) .

**12.** Capteur selon l'une quelconque des revendications 9 à 11,
*caractérisé*
*en ce que* la source (60) de lumière de test est positionnée de telle façon que la lumière de test (61, ..., 69) est envoyée depuis la zone de surveillance (12) sur le détecteur (30) en dehors d'une optique (32) servant à envoyer la lumière (24).

**13.** Capteur selon l'une quelconque des revendications 9 à 12,
*caractérisé*

*en ce que* les segments (41, ..., 49) de détecteur sont des segments de détecteur de même type.

14. Capteur selon l'une quelconque des revendications 9 à 13,
   *caractérisé*
   *en ce que* la source (60) de lumière de test est placée sur le même circuit imprimé (80) que le détecteur (30).

15. Capteur selon l'une quelconque des revendications 9 à 14,
   qui est conformé en capteur de triangulation.

16. Capteur selon l'une quelconque des revendications 9 à 15,
   *caractérisé*
   *en ce qu'*au moins une optique diffractante est présente comme moyen pour envoyer la lumière de test (61, ..., 69) sur le détecteur (30).

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03067900 A
- DE 102006058057 B3
- DE 202006014318 U1
- DE 10017333 C2
- EP 902402 A2
- DE 102004035243 B4